# EUROPÄISCHE PATENTSCHRIFT

(11) **EP 0 961 703 B1**
(45) Veröffentlichungstag und Bekanntmachung des Hinweises auf die Patenterteilung: **27.12.2000**
(21) Anmeldenummer: 98913528.0
(22) Anmeldetag: 24.02.1998
(51) Int. Cl.: B60J 5/04

(54) **MOTOR-GETRIEBE-EINHEIT FÜR VERSTELLEINRICHTUNGEN IN KRAFTFAHRZEUGEN**
ENGINE- GEARBOX UNIT FOR ADJUSTMENT DEVICES IN MOTOR VEHICLES
ENSEMBLE MOTO-REDUCTEUR POUR SYSTEMES DE REGLAGE DANS DES VEHICULES AUTOMOBILES

(30) Priorität: 27.02.1997 DE 19707850
(43) Veröffentlichungstag der Anmeldung: 08.12.1999
(73) Patentinhaber: Brose Fahrzeugteile GmbH & Co. KG Coburg, 96450 Coburg (DE)
(72) Erfinder: KALB, Roland, D-96269 Rossach (DE); PERSCHKE, Henry, D-96242 Sonnefeld (DE); MÜNEKHOFF, Bernd, D-96237 Ebersdorf (DE); SÜNKEL, Manfred, D-96450 Coburg (DE); FRÖHLICH, Thomas, D-96049 Bamberg (DE)
(74) Vertreter: Baumgärtel, Gunnar
(86) Internationale Anmeldenummer: DE9800577
(87) Internationale Veröffentlichungsnummer: WO9838057

(56) Entgegenhaltungen:
- EP-A- 0 579 535
- WO-A-94/03341
- DE-A- 19 509 282
- DE-C- 19 513 085
- US-A- 4 848 829

## Beschreibung

Die Erfindung betrifft eine Motor-Getriebe-Einheit für Verstelleinrichtungen in Kraftfahrzeugen gemäß dem Oberbegriff des Patentanspruchs 1 und eignet sich insbesondere zur Anwendung in einer Fahrzeugtür mit einer Wandung zur Trennung von Naßraum und Trockenraum.

Aus der EP-A-579 535 ist eine Grundplatte bekannt, auf der von der Trockenraumseite her ein Türgriff, eine Innenverkleidung sowie ein Schalter für eine auf der Naßraumseite befestigte Fensterhebereinheit angeordnet ist. Die Fensterhebereinheit ist mitsamt der Motor-Getriebe-Einheit auf der Naßraumseite der Grundplatte angeordnet, die von der Trokkenraumseite vor die Öffnung an das Türinnenblech des Türkörpers geschraubt wird, so daß die Fahrzeugtür in einen außenliegenden Naßraum und einen innenliegenden Trockenraum geteilt wird.

Eine weitere Vorrichtung zum Einsatz für die Tür eines Kraftfahrzeugs ist aus DE 195 09 282 A1 bekannt. Sie zeigt eine Trägerplatte, auf der eine Vielzahl von Funktionseinheiten wie Fensterheber mit Antriebs- und Steuereinheit, Schloß, Lautsprecher und Kabelbaum montiert ist. Dadurch wird ein umfangreich ausgestattetes und vorprüfbares Modulgeschaffen, das eine effiziente Fertigung von Fahrzeugtüren in hoher Qualität ermöglicht. Die Trägerplatte weist in ihrem Randbereich eine umlaufende Dichtung auf und schließt einen vergleichsweise großen Ausschnitt im Türinnenlech wasserdicht ab, so daß die Fahrzeugtür in einen außenliegenden Naßraum und einen innenliegenden Trockenraum geteilt wird.

Um die elektrischen Komponenten in der kostengünstigen Trockenraumausführung fertigen zu können, werden diese auf der Trockenraumseite der Trägerplatte montiert. Dies gilt auch für ein Antriebs- und Steuerungsmodul, das aus einem Elektromotor, einem Getriebe, einer elektronischen Steuereinheit und einem Schalterblock besteht. Die Abtriebswelle der Antriebseinheit greift dabei durch eine kleine Öffnung in der Trägerplatte, die durch eine Dichtung zwischen dem Getriebegehäuse und der Trägerplatte trockenraumseitig abgedichtet wird. Mit dem hindurchgesteckten Ende der Abtriebswelle wird eine Verbindung mit dem Mechanismus eines Fensterhebers, z.B. über den Eingriff in eine Seiltrommel eines Bowdenrohr-Fensterhebers, hergestellt.

Ausgehend von der EP-A-579 535 liegt der Erfindung die Aufgabe zugrunde, eine Motor-Getriebe-Einheit für Verstelleinrichtungen in Kraftfahrzeugen zu entwickeln, die als komplett vorprüfbare und vorgefertigte Einheit zum Anbau an eine Wandung, die einen Naßraum von einem Trockenraum trennt, geeignet ist, wobei die elektrischen und ggf. elektronischen Komponenten in Trockenraumausführung einsetzbar sein sollen; ebenso soll eine einfache Wartung bzw. Reparatur der Motor-Getriebe-Einheit möglich sein.

Erfindungsgemäß wird die Aufgabe durch eine Grundplatte gelöst, die von der Naßraumseite her an die Wandung montiert ist, wobei zumindest die Elemente zur elektrischen Kontaktierung des Elektromotors mittels der Öffnung der Wandung im montierten Zustand von der Trockenraumseite zugänglich sind.

Nach einer ersten Variante wird die Grundplatte mit der Motor-Getriebe-Einheit von der Naßraumseite her an die Wandung zwischen Naß- und Trockenraum montiert, wobei die Öffnung in der Wandung wasserdicht abgeschlossen wird.

Nach einer zweiten Variante reicht die Öffnung bis in den Rand der Wandung hinein, so daß ein Ausschnitt mit im wesentlichen U-förmiger Kontur entsteht. Der Rand dieses Ausschnitts kann mit einer Führungsnut in Eingriff gebracht werden, die in die schmale umlaufende Stirnfläche der Grundplatte eingearbeitet ist. Dazu wird die Führungsnut der Grundplatte dem Rand des im wesentlichen U-förmigen Ausschnitts zugeführt und die Grundplatte parallel zur Wandung solange verschoben, bis die Öffnung verschlossen ist.

Bei Anwendung der ersten Variante, bei der eine Öffnung (mit geschlossenem Rand) in einer Wandung, z.B. in einem Türinnenblech oder in einer Trägerplatte, von einer Grundplatte von der Naßraumseite her geschlossen wird, muß die Öffnung wenigstens so groß sein, daß die Elemente zur elektrischen Kontaktierung, wie z. B. Steckverbindungen, von der Trockenraumseite her zugänglich sind. Es versteht sich von selbst, daß die Gehäusewandungen der Motor-Getriebe-Einheit, die eine Grenzfläche zwischen Naßraum und Trockenraum bilden, ebenfalls wasserdicht sein müssen. Falls eine Verlagerung der Motor-Getriebe-Einheit in Richtung Trockenraum erwünscht sein sollte, so kann bei einer hinreichend großen Öffnung diese Einheit hindurchgesteckt werden. Hierdurch werden in der Regel die Vorraussetzungen für eine weitestgehend ebene und damit einfache Gestaltung der Grundplatte geschaffen, was wiederum eine einfache und sichere Abdichtung ermöglicht.

Die Ausbildung des Dichtungsbereichs zwischen der Grundplatte und der Wandung zwischen Naß- und Trockenraum kann durch separate Dichtungselemente erfolgen, die entweder auf der Grundplatte oder der Wandung vormontiert werden, oder die Dichtung wird in einem Kunststoff-Spritzwerkzeug in einem zweistufigen Verfahren in die Grundplatte integriert. Dieses Verfahren ist unter dem Begriff der 2-K-Technik bekannt.

Als Dichtungsmaterial kann aber auch eine hinreichend elastische Dichtfolie, die die Wandung weitestgehend überdeckt und die eigentliche Feuchtigkeitssperre bildet, zum Einsatz kommen. Vorzugsweise ist die Dichtfolie auf der Trockenraumseite der Wandung angeordnet und durch die Öffnung hindurch auf die Naßraumseite umgeschlagen, wo ein pressender Sitz mit der Grundplatte vorgesehen ist, so daß die Abdichtung naßraumseitig erfolgt.

Als Befestigungselemente zwischen der Grundplatte und der Wandung können Schrauben, Nieten oder Clipse dienen. Es sollte jedoch darauf geachtet werden, daß die Befestigungsstellen innerhalb der Kontur der Dichtung liegen, um zusätzliche Maßnahmen zur Abdichtung der Durchgriffsöffnungen der Befestigungselement zu vermeiden.

Nachfolgend wird die Erfindung anhand von Ausführungsbeispielen unter Bezugnahme auf die in der Zeichnung dargestellten Figuren näher erläutert. Es zeigen:
- Figur 1: eine Seitenansicht einer Grundplatte mit Motor-Getriebe-Einheit in einer Öffnung einer Wandung zur Trennung eines Naßraums von einem Trockenraum;
- Figur 2: eine naßraumseitige Ansicht der Motor-Getriebe-Einheit gemäß Figur 1;
- Figur 3: eine perspektivische Darstellung der Naßraumseite einer Grundplatte mit Motor-Getriebe-Einheit und einem einstückig an die Grundplatte angeformten Getriebegehäuse in Form eines Seiltrommelgehäuses;
- Figur 4: eine perspektivische Darstellung der Trockenraumseite der Grundplatte mit Motor-Getriebe-Einheit gemäß Figur 3;
- Figur 5: eine schematische Schnittdarstellung einer Motor-Getriebe-Einheit mit Elementen zur Montagehilfe und in die Grundplatte integriertem Gehäuse der elektronischen Steuereinheit;
- Figur 6: eine schematische Schnittdarstellung einer Motor-Getriebe-Einheit mit clipsbaren Befestigungselementen und einer als Dichtfolie ausgebildeten Dichtung;
- Figur 7: eine schematische Darstellung einer Trägerplatte mit offenem Ausschnitt, dem eine Grundplatte mit entsprechend gerichteter Befestigungsnut zugeordnet ist;
- Figur 8: eine perspektivische Darstellung eines doppelsträngigen Bowdenrohr-Fensterhebers mit vormontierter Motor-Getriebe-Einheit mit Grundplatte, die von der Naßraumseite her in eine Öffnung einer Trägerplatte montiert wird;
- Figur 9: eine perspektivische Darstellung der Anordnung und Montageweise eines doppelsträngigen Bowdenrohr-Fensterhebers, einer Montageplatte und einer Motor-Getriebe-Einheit.

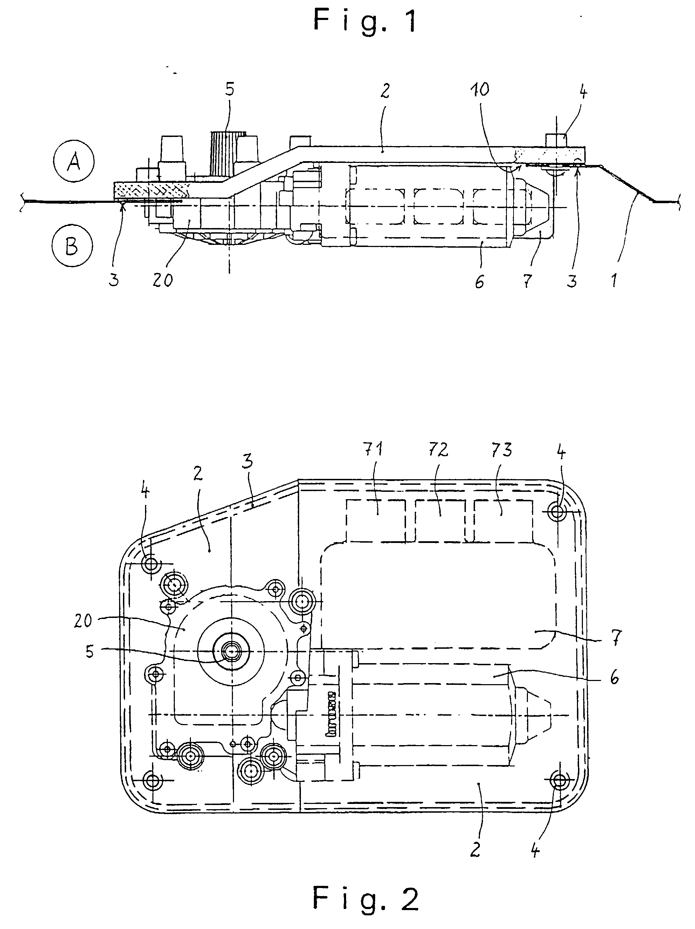

Die Ausführungsvariante gemäß den Figuren 1 und 2 verwendet eine weitestgehend ebene, in Anpassung an die versetzten Befestigungsbereiche am Rand der Öffnung 10 der Wandung 1 jedoch leicht gekröpfte Grundplatte 2, die gleichzeitig einen homogenen Bestandteil des Getriebegehäuses 20 für die Zahnradelemente bildet. Da vorgesehen ist, die Grundplatte 2 mittels der sogenannten 2-K-Technik herzustellen, kann die umlaufende Dichtung 3 aus einem geeigneten weicheren Material mit integriert werden.

Die Grundplatte 2 wurde so groß ausgelegt, daß ihre äußere Kontur mit der umlaufenden Dichtung 3 sämtliche Komponenten (Motor 6, Getriebegehäuse 20, elektronische Steuereinheit 7 mit den Steckern 71, 72, 73) umschließt. Da auch die Öffnung 10 in der Wandung 1 nicht wesentlich kleiner dimensioniert wurde, können die bezeichneten Komponenten leicht von der Naßraumseite her in den Trockenraum eingefädelt werden. Zur Verbindung der Grundplatte 2 mit der Trägerplatte 1 sind Befestigungselemente 4 vorgesehen, die jedoch selbst wasserdicht sein sollten, da sie die Grundplatte 2 duchdringen. Anderenfalls besteht die Gefahr, daß eine durchlässige Verbindung zwischen dem Naßraum A und dem Trockenraum B entstehen könnte.

Das einzige Funktionselement, das die Grundplatte 2 zur Naßraumseite A hin durchragt, ist die Welle des Abtriebs 5, die selbstverständlich gegenüber der Grundplatte 2 abgedichtet ist. Bei einer Verwendung der Motor-Getriebe-Einheit für einen elektrisch angetriebenen Fensterheber einer Kraftfahrzeugtür kann der Abtrieb beispielsweise mit der Seiltrommel eines Seilfensterhebers oder dem Ritzel eines Armfensterhebers verbunden sein.

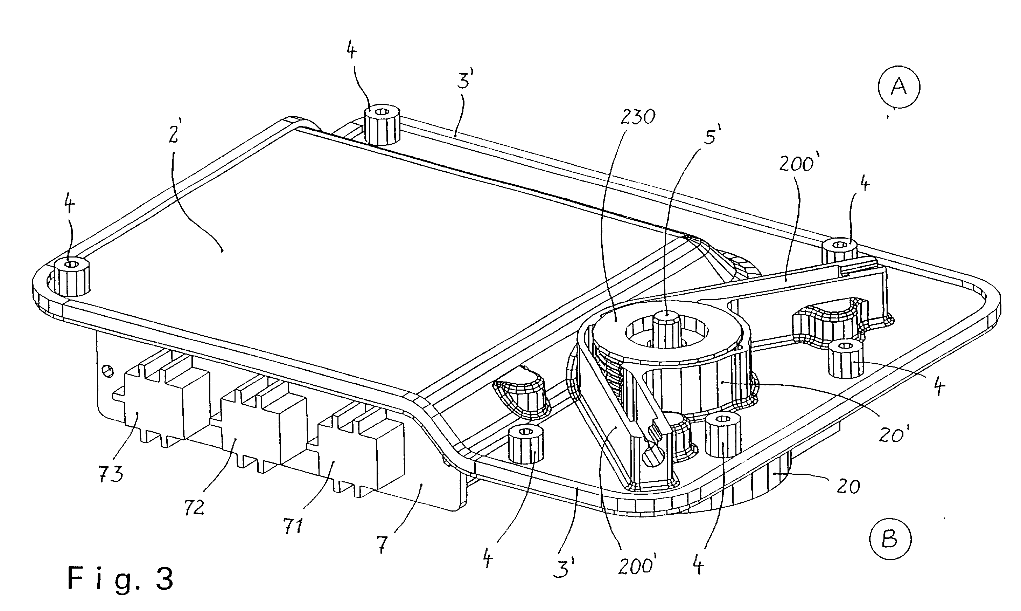

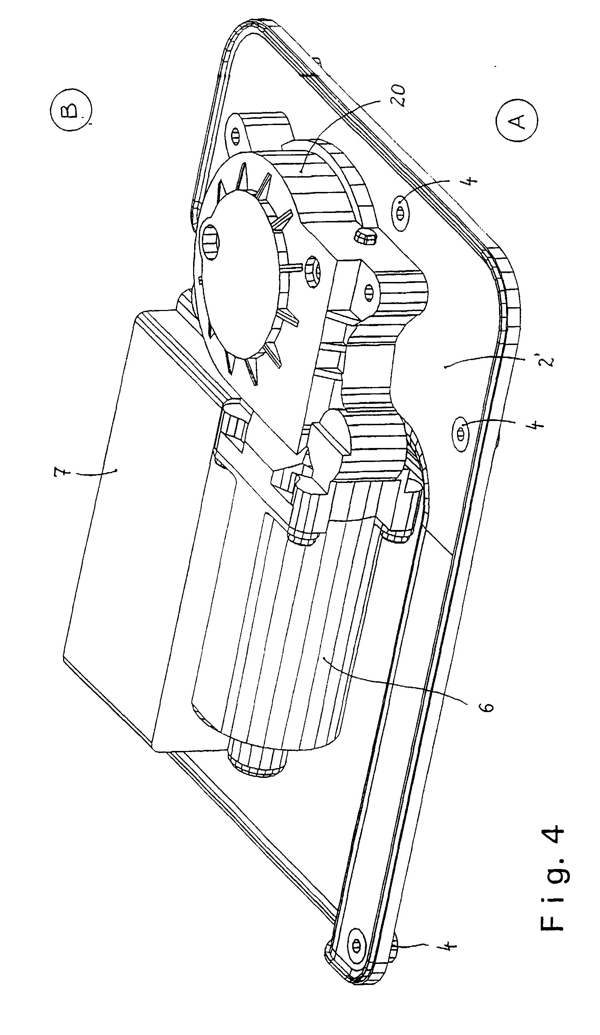

Das Ausführungsbeispiel von Figur 3 und 4 unterscheidet sich von dem vorstehend beschriebenen Ausführungsbeispiel im wesentlichen dadurch, daß nicht das Getriebegehäuse 20 der Zahnradelemente, sondern das Getriebegehäuse für die Seiltrommel 230, einschließlich ihrer Seilausgänge 200', mit der Grundplatte 2' ein einstückiges Bauteil bilden. Hierdurch werden die Servicebedingungen wesentlich verbessert. Im Falle eines Schadens in der Elektronikeinheit 7, des Motors 6 oder des vom Getriebegehäuse 20 umschlossenen Zahnradgetriebes kann in einfacher Weise ein Austausch erfolgen, ohne daß die Grundplatte 2' demontiert werden muß. Das bedeutet, daß in die Verstellmechanik des Fensterhebers nicht eingegriffen werden muß, wodurch der Serviceaufwand erheblich verringert wird.

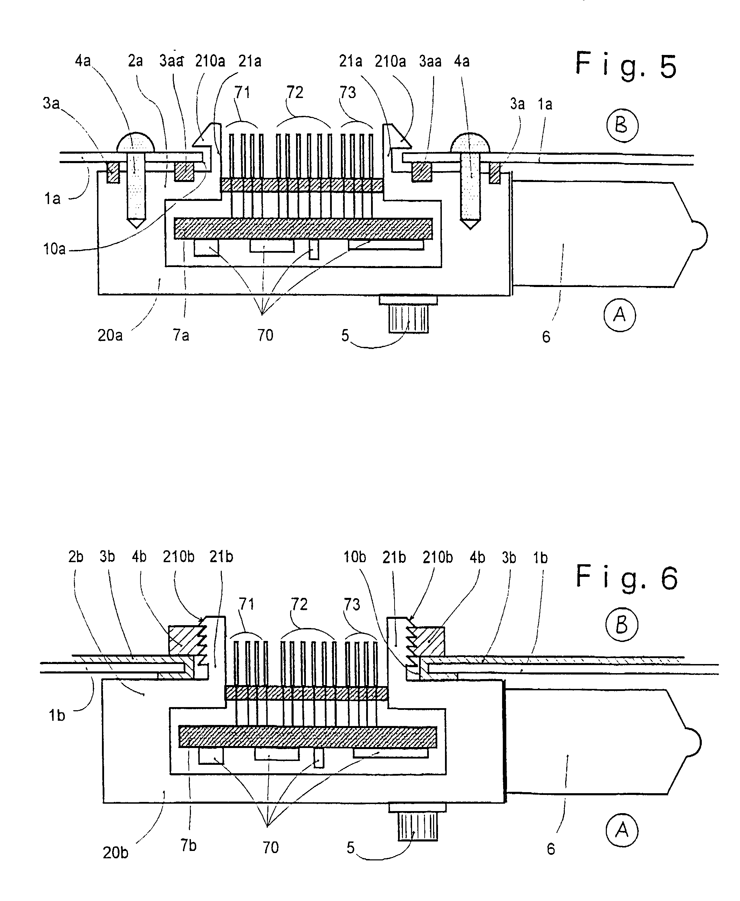

Die schematische Schnittdarstellung gemäß Figur 5 zeigt eine Motor-Getriebe-Einheit, deren Gehäuse 20a sowohl Teile des Getriebes als auch der elektronischen Steuereinheit umfaßt. In das Gehäuse 20a ist die Grundplatte 2a sowie eine Montagehilfe, bestehend aus dem Durchzug 21a mit den Haken 210a, integriert. Mittels der Montagehilfe gelingt in einfacher Weise eine grobe Fixierung der Motor-Getriebe-Einheit an der Trägerplatte 1a, bevor die Befestigungsschrauben 4a gesetzt werden. Die Befestigugsschrauben 4a werden von der Trockenraumseite B her durch die Trägerplatte 1a in Sacklöcher des Gehäuses 20a zwischen zwei umlaufenden Dichtungen 3a, 3aa eingeschraubt. Obwohl die Verwendung der äußeren Dichtung 3a in der Regel für die Gewährleistung der Dichtheit ausreichend sein wird, kann unter extremen Belastungsbedingungen eine zweite Dichtung erst das gewünschte Maß an Sicherheit garantieren.

Im Durchzug 21a sind elektrische Stecker 71, 72, 73 angeordnet, die mit einer Leiterplatte 7a und elektronischen Bauelementen 70 in Verbindung stehen. Die Stecker 71, 72, 73 sind von der Trockenraumseite B her zugänglich und dienen der Stromversorgung des Motor und der elektonischen Steuereinheit bzw. der Signalfortleitung. Alle übrigen Komponenten der Motor-Getriebe-Einheit sind wasserdicht gekapselt, sie befinden sich körperlich auf der Naßraumseite A.

Der Aufbau der Motor-Getriebe-Einheit gemäß Figur 6 gleicht dem von Figur 5 weitestgehend. Es bestehen jedoch Unterschiede hinsichtlich ihre Abdichtung und Befestigung. So verwendet die Ausführungsvariante von Figur 6 eine folienartige Dichtung 3b, die auf die Trockenraumseite B der Trägerplatte 1b aufgebracht und durch die Öffnung 10b hindurch auf die Naßraumseite A umgeschlagen ist. Die Befestigung der Motor-Getriebe-Einheit erfolgt durch ein clipsbares Befestigungselement 4b, das formschlüssig in die Rastzähne 210b des Durchzugs 21b eingreifen kann. Die Befestigung ist so stark zu verspannen, daß ein für die Abdichtung hinreichender Preßsitz zwischen dem umgeschlagenen Bereich der Dichtfolie 3b und dem Gehäuse 20b bzw. der Grundplatte 2b hergestellt wird.

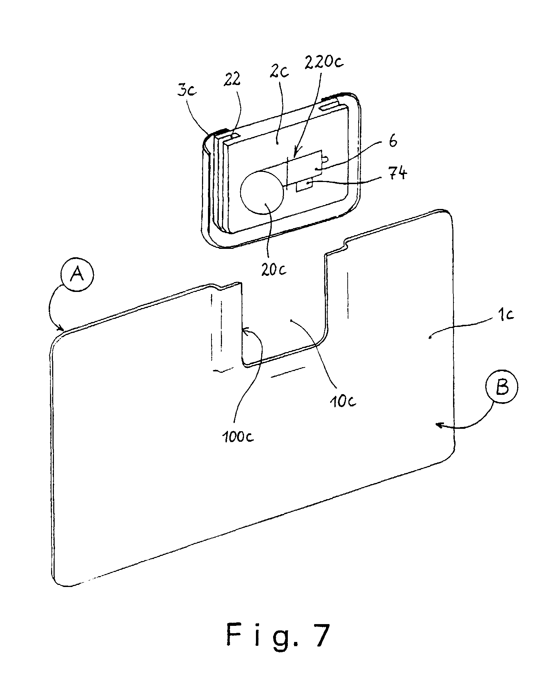

Eine Variante der Erfindung ist schematisch in Figur 7 dargestellt. Ausgehend von einem nach oben offenen Ausschnitt 10c in der Trägerplatte 1c wird die Grundplatte 2c nicht - wie voran beschrieben - von der Naßraumseite her, sondern von oben montiert. Dabei wird die Grundplatte 2c mit ihrer an der schmalen Stirnseite umlaufenden Nut 22 in die Öffnung 10c eingeschoben, wobei der Rand 100c mit der Nut 22 formschlüssig in Eingriff tritt. Auf eine Arretierung der Grundplatte 2c auf der Trägerplatte 1c durch separate Befestigungsmittel kann gegebenenfalls verzichtet werden, z.B. wenn nach dem Aufsetzen der Türinnenverkleidung eine hinreichende Lagestabilisierung erreicht ist.

Die schematisch dargestellte Antriebs- und Steuereinheit 220c, bestehend aus dem Getriebe 20c, dem Motor 6 und dem elektrischen Stecker 74, ist auf der Trockenraumseite B angeordnet, wobei zumindest ein Teil des Getriebegehäuses 20c in die Grundplatte 2c integriet ist. Eine an der äußeren Kontur der Grundplatte 2c und auf der Naßraumseite A angeordnete umlaufende Dichtung 3c sorgt für einen optimalen Nässeschutz.

Selbstverständlich kann der offene Ausschnitt 10c auch eine von der U-Form abweichende Kontur aufweisen und bei Bedarf an einem der seitlichen Ränder der der Trägerplatte 1c angeordnet sein.

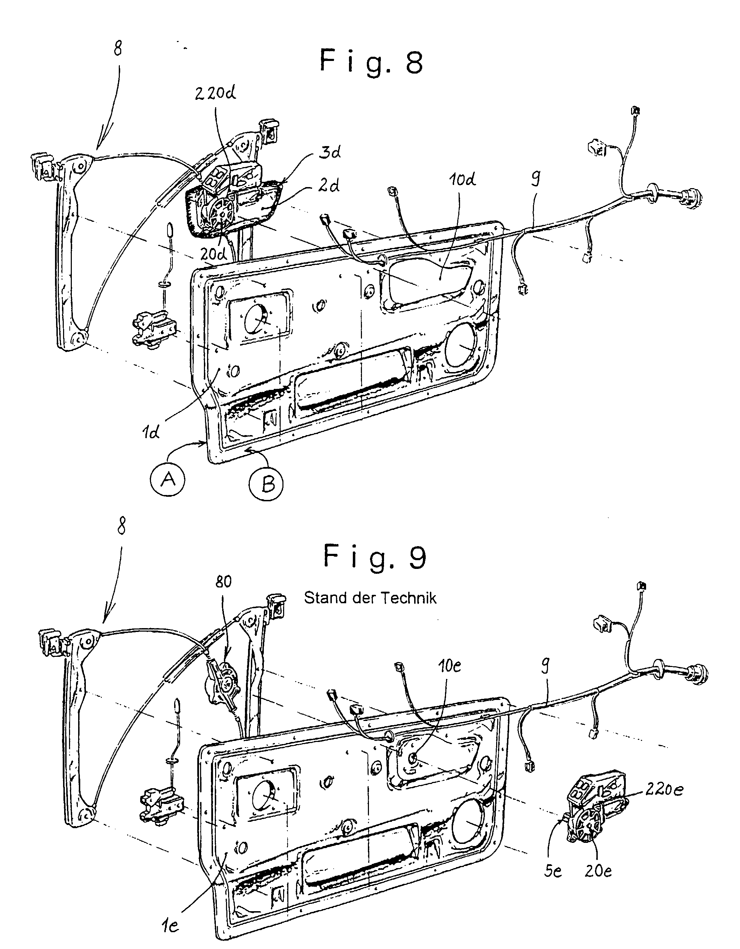

Figur 8 zeigt in perspektivischer Darstellung die Anwendung der Erfindung für einen doppelsträngigen Bowdenrohr-Fensterheber 8, der auf eine Trägerplatte ld montiert werden soll. An dieser Stelle sei darauf hingewiesen, daß anstatt der Trägerplatte ld auch das Innenblech einer Kraftfahrzeugtür Verwendung finden kann.

Die Antriebs- und Steuereinheit 220d mit der integrierten Grundplatte 2d steht in vormontierter Verbindung mit der Fensterhebermechanik 8, wobei der Abtrieb in eine Seiltrommel eingreift, die in einem Seiltrommelgehäuse 80 lagert. Damit liegt eine vollständig funktionsfähige und vorprüfbare Einheit vor. Bei ihrer Montage auf die Trägerplatte 1d wird die Antriebs- und Steuereinheit 220d durch die Öffnung 10d der Trägerplatte 1d geführt. Die auf der Grundplatte 2d angeordnete Dichtung 3d umschließt die Öffnung 10d vollständig und dichtet diese ab. Anschließend können die elektrischen Verbindungen des Kabelbaums 9 gesteckt werden.

Figur 9 zeigt eine aus dem Stand der Technik bekannte Lösung unter Verwendung einer im Vergleich zur Variante von Figur 4 gleichartigen Antriebs- und Steuereinheit 220e und einer identischen Fensterhebermechanik 8. Es wird jedoch eine modifizierte Trägerplatte le mit einer kleinen Durchgriffsöffnung 10e für den Abtrieb 5e verwendet, während eine in die Antriebs- und Steuereinheit integrierte Grundplatte, die von der Naßraumseite her montierbar ist, fehlt. Diese Konstruktion erlaubt nicht die Herstellung einer kompletten und vorprüfbaren Funktionseinheit unter Ausschluß der Trägerplatte le bzw. des (nicht dargestellten) Türinnenblechs. Bei der Montage eines Fensterhebers am Türinnenblech entsteht im Vergleich zur Lösung von Figur 8 ein erhöhter Montageaufwand, der durch ein ergonomisch ungünstiges Handling und die damit verbundene Gefahr von Fehlern gekennzeichnet ist.

### Bezugszeichenliste

- 1: Wandung zwischen Trockenraum und Naßraum
- 1a: Wandung zwischen Trockenraum und Naßraum
- 1b: Wandung zwischen Trockenraum und Naßraum
- 1c: Wandung zwischen Trockenraum und Naßraum
- 1d: Wandung zwischen Trockenraum und Naßraum
- 1e: Wandung zwischen Trockenraum und Naßraum
- 10: Öffnung in der Wandung
- 10a: Öffnung in der Wandung
- 10b: Öffnung in der Wandung
- 10c: Öffnung in der Wandung
- 10d: Öffnung in der Wandung
- 10e: Öffnung in der Wandung
- 100c: Rand der Öffnung

- 2: Grundplatte
- 2': Grundplatte
- 2a: Grundplatte
- 2b: Grundplatte
- 2c: Grundplatte
- 2d: Grundplatte
- 20: Gehäuse des Getriebes (ohne Seiltrommel)
- 20': Gehäuse des Getriebes (ohne Zahnradelemente)
- 20a: Gehäuse des Getriebes und elektronischen Steuergeräts
- 20b: Gehäuse des Getriebes und elektronischen Steuergeräts
- 20c: Antriebseinheit
- 20d: Gehäuse des Getriebes
- 20e: Gehäuse des Getriebes
- 21a: Durchzug
- 21b: Durchzug
- 22: Nut
- 200': Seilausgang
- 210a: Haken
- 210b: Rastzähne
- 220c: Antriebs- und Steuereinheit
- 220d: Antriebs- und Steuereinheit
- 220e: Antriebs- und Steuereinheit
- 230: Seiltrommel

- 3: Dichtungsbereich
- 3': Dichtung
- 3a: Dichtung
- 3aa: Dichtung
- 3b: Dichtfolie
- 3c: Dichtung mit Dichtlippe
- 3d: Dichtung

- 4: Befestigungselement
- 4a: Befestigungselement
- 4b: Befestigungselement

- 5: Abtrieb / Abtriebsachse
- 5': Abtrieb / Abtriebsachse
- 5e: Abtrieb / Abtriebsachse

- 6: Motor

- 7: elektronisches Steuergerät
- 7a: Leiterplatte
- 7b: Leiterplatte
- 70: elektronische Bauelemente
- 71: Stecker
- 72: Stecker
- 73: Stecker
- 74: Stecker

- 8: Bowdenrohr-Fensterheber, doppelsträngig
- 80: Seiltrommelgehäuse mit Seiltrommel

- 9: Kabelbaum
- A: Naßraumseite
- B: Trockenraumseite

## Patentansprüche

1. Motor-Getriebe-Einheit für Verstelleinrichtungen in Kraftfahrzeugen mit einer die Motor-Getriebe-Einheit tragenden und in eine Öffnung (10, 10a, 10b, 10d, 10e) einer einen Naßraum von einem Trockenraum trennenden Wandung (1, 1a, 1b, 1d) montierbaren Grundplatte (2, 2a, 2b, 2d), wobei der Abtrieb (5, 5', 5e) der Motor-Getriebe-Einheit auf der Naßraumseite (A) und zumindest die Elemente (71, 72, 73) zur elektrischen Kontaktierung des Elektromotors (6) und gegebenenfalls eines Schalters und/oder eines elektronischen Steuergerätes auf der Trockenraumseite (B) angeordnet sind, und mit einem die Öffnung umschließenden Dichtungsbereich (3), der zwischen der Wandung (1, 1a, 1b, 1d) und der Grundplatte (2, 2a, 2b, 2d) angeordnet ist, wobei die Grundplatte (2, 2a, 2b, 2d) zumindest mit einem Teil des Getriebegehäuses (20, 20', 20a, 20b, 20d) eine Einheit bildet,
**dadurch gekennzeichnet**,
daß die Grundplatte (2, 2a, 2b, 2d) von der Naßraumseite (A) her an die Wandung (1, 1a, 1b, 1d) montiert ist und daß die Öffnung (10, 10a, 10b, 10d, 10e) der Wandung (1, 1a, 1b, 1d) dergestalt dimensioniert ist, daß zumindest die Elemente zur elektrischen Kontaktierung (71, 72, 73) des Elektromotors (6) mittels der Öffnung (10, 10a, 10b, 10d, 10e) im montierten Zustand von der Trockenraumseite (B) zugänglich sind.

2. Motor-Getriebe-Einheit nach Anspruch 1, **dadurch gekennzeichnet**, daß die Grundplatte (2) und das Getriebegehäuse (20) für Zahnradelemente als einstückiges Bauteil ausgebildet sind.

3. Motor-Getriebe-Einheit nach Anspruch 1, **dadurch gekennzeichnet**, daß die Grundplatte (2) und das Getriebegehäuse (20') für eine Seiltrommel (230) mit Seilausgängen (200) als einstückiges Bauteil ausgebildet sind.

4. Motor-Getriebe-Einheit nach Anspruch 1, **dadurch gekennzeichnet**, daß die Öffnung (10, 10d) in der Wandung (1, 1d) zwischen Naßraum (A) und Trockenraum (B) wenigstens so groß ist, daß der Motor (6) und ggf. das elektronische Steuergerät (7) bzw. die Antriebs- und Steuereinheit (220d) durch die Öffnung (10, 10d) geführt werden können.

5. Motor-Getriebe-Einheit nach Anspruch 4, **dadurch gekennzeichnet**, daß die Kontur des Dichtungsbereichs (3) über die Kontur der Motor-Getriebe-Einheit (6, 20, 20') und des ggf. vorhandenen elektronischen Steuergeräts (7) mit den Steckern (71, 72, 73) hinausragt.

6. Motor-Getriebe-Einheit nach Anspruch 1, **dadurch gekennzeichnet**, daß am Dichtungsbereich der Wandung (1a) ein separates Dichtungselement (3a, 3aa) befestigt ist.

7. Motor-Getriebe-Einheit nach Anspruch 1, **dadurch gekennzeichnet**, daß am Dichtungsbereich der Wandung (1b) ein separates Dichtungselement (3b) befestigt ist, das vorzugsweise in Form einer Dichtfolie die gesamte Wandung (1b) von der Trockenraumseite (B) her überdeckt.

8. Motor-Getriebe-Einheit nach Anspruch 1, **dadurch gekenn-zeichnet**, daß ein Dichtungselement (3, 3') in sogenannter 2K-Technik (2-Komponenten-Technik) in die Grundplatte (2, 2') einstückig integriert ist.

9. Motor-Getriebe-Einheit nach einem der voranstehenden Ansprüche, **dadurch gekennzeichnet**, daß Befestigungselemente (4, 4a, 4b), z.B. Schrauben, Nieten oder Clipse, zur Verbindung von Grundplatte (2, 2a, 2b) und der Wandung (1, 1a, 1b) innerhalb der geschlossenen Dichtungskontur der Dichtung (3, 3a, 3b) liegen.

10. Motor-Getriebe-Einheit für Verstelleinrichtungen in Kraftfahrzeugen mit einer die Motor-Getriebe-Einheit tragenden und in eine Öffnung (10c) einer einen Naßraum von einem Trockenraum trennenden Wandung (1c) montierbaren Grundplatte (2c), wobei der Abtrieb des Getriebes auf der Naßraumseite (A) und zumindest die Elemente zur elektrischen Kontaktierung (74) des Elektromotors (6) und gegebenenfalls eines Schalters und/oder eines elektronischen Steuergerätes auf der Trockenraumseite (B) angeordnet sind, und mit einem die Öffnung (10c) umschließenden Dichtungsbereich,
**dadurch gekennzeichnet,**
daß die Grundplatte (2c) zumindest mit einem Teil des Getriebegehäuses (20c) eine Einheit bildet, daß die Öffnung (10c) bis in den Rand der Wandung (1c) hineinreicht und einen im wesentlichen U-förmigen Ausschnitt bildet, und daß die Grundplatte (2c) eine der Kontur des U-förmigen Ausschnitts entsprechend gerichtete Führungsnut (22) aufweist, die mit dem Rand (100c) der Öffnung (10c) in Eingriff bringbar ist.

11. Motor-Getriebe-Einheit nach Anspruch 10, **dadurch gekennzeichnet**, daß der U-förmige Ausschnitt nach oben offen ist.

12. Motor-Getriebe-Einheit nach Anspruch 10, **dadurch gekennzeichnet**, daß die Grundplatte (2c) eine umlaufende Dichtung (3c) aufweist, die sich an der Wandung (1c) von der Naßraumseite (A) her abstützt.

## Claims

1. Motor/gearbox unit for adjustment devices in motor vehicles with a base plate (2, 2a, 2b, 2d) supporting the motor/gearbox unit and able to fit into an opening (10,10a, 10b, 10d, 10e) of a wall (1, 1a, 1b, 1d) which separates a wet space from a dry space wherein the output (5, 5',5e) of the motor gear unit is mounted on the wet space side (A) and at least the elements (71, 72,73) for the electrical contact with the electric motor (6) and where applicable a switch and/or an electronic control device are mounted on the dry space side (B) , and with a sealing area (3) enclosing the opening and mounted between the wall (1, 1a, 1b, 1d) and base plate (2, 2a, 2b, 2d),
wherein the base plate (2, 2a, 2b, 2d) forms one unit with at least a part of the gear housing (20, 20', 20a, 20b, 20d)
characterised in that the base plate (2, 2a, 2b, 2d) is mounted on the wall (1, 1a, 1b, 1d) from the wet space side (A) and that the opening (10, 10a, 10b, 10d, 10e) of the wall (1, 1a, 1b, 1d) is dimensioned so that at least the elements for the electrical contact (71, 72, 73) with the electric motor (6) are accessible from the dry space side (B) by means of the opening (10, 10a, 10b, 10d) in the assembled state.

2. Motor/gearbox unit according to claim 1 characterised in that the base plate (2) and the gear housing (20) for the gear wheel elements are formed as a one-piece component part.

3. Motor/gearbox unit according to claim 1 characterised in that the base plate (2) and the gear housing (20') for a cable drum with cable outlets (200) are formed as a one-piece component part.

4. Motor/gearbox unit according to claim 1 characterised in that the opening (10,10d) in the wall (1,1d) between the wet space (A) and dry space (B) is at least so large that the motor (6) and where applicable the electronic control device (7) or the drive and control unit (220d) can be guided through the opening (10,10d).

5. Motor/gearbox unit according to the claim 4 characterised in that the contour of the sealing area (3) projects over the contour of the motor/gearbox unit (6, 20,20') and of any electronic control device (7) and plugs (71,72,73) which may be present.

6. Motor/gearbox unit according to claim 1 characterised in that a separate sealing element (3a, 3aa) is fixed on the sealing area of the wall (1a).

7. Motor/gearbox unit according to claim 1 characterised in that a separate sealing element (3b) is fixed on the sealing area of the wall (1b) and, preferably in the form of a sealing foil, covers the entire wall (1b) from the dry space side (B).

8. Motor/gearbox unit according to claim 1 characterised in that a sealing element (3,3') is integrated in one piece in the base plate (2,2') in so-called 2K-technology (2-component technology).

9. Motor/gearbox unit according to one of the preceding claims, characterised in that the fixing elements (4, 4a, 4b) eg screws, rivets or clips, for connecting the base plate (2, 2a, 2b) and wall (1, 1a, 1b) lie inside the closed sealing contour of the seal (3, 3a, 3b).

10. Motor/gearbox unit for adjustment devices in motor vehicles with a base plate (2c) supporting the motor/gearbox unit and able to fit in an opening (10c) of a wall separating a wet space from a dry space wherein the output of the gear is mounted on the wet space side (A) and at least the elements for the electrical contact (74) of the electric motor (6) and where applicable switch and/or electronic control device are mounted on the dry space side (B), and with a sealing area enclosing the opening
characterised in that the base plate (2c) forms one unit at least with a part of the gear housing (20c), that the opening (10c) extends up into the edge of the wall (1c) and forms a substantially U-shaped cut-out section and that the base plate (2c) has a guide groove (22) which is directed according to the contour of the U-shaped cut-out section and which can be brought into engagement with the edge (100c) of the opening (10c).

11. Motor/gearbox unit according to claim 10 characterised in that the U-shaped cut-out section is open upwards.

12. Motor/gearbox unit according to claim 10 characterised in that the base plate (2c) has a circumferential seal (3c) which is supported on the wall (1c) from the wet space side (A).

## Revendications

1. Ensemble moto-réducteur pour des systèmes de réglage dans des véhicules automobiles avec une plaque d'embase (2, 2a, 2b, 2d) portant l'ensemble moto-réducteur et pouvant être monté dans une ouverture (10, 10a, 10b, 10d, 10 e) d'une paroi (1, 1a, 1b, 1d) séparant une chambre humide d'une chambre sèche, la sortie (5, 5', 5 e) de l'ensemble moto-réducteur étant disposée sur le côté chambre humide (A) et au moins les éléments (71, 72, 73) pour le contact électrique du moteur électrique (6) éventuellement d'un commutateur et/ou d'un appareil de commande électronique étant disposés sur le côté chambre sèche (B) et avec une zone d'étanchéité entourant l'ouverture, qui est disposée entre la paroi (1, 1a, 1b, 1d) et la plaque d'embase (2, 2a, 2b, 2d) la plaque d'embase (2, 2a, 2b, 2d) formant au moins une partie du logement de réducteur (20, 20', 20a, 20b, 20d),
caractérisé en ce que,
la plaque d'embase (2, 2a, 2b, 2d) est montée à partir du côté de chambre humide (A) sur la paroi (1, 1a, 1b, 1d) et en ce que l'ouverture (10, 10a, 10b, 10d, 10 e) de la paroi (1, 1a, 1b, 1d) est dimensionnée de telle sorte qu'au moins les éléments destinés au contact électrique (71, 72, 73) du moteur électrique (6) sont accessibles au moyen de l'ouverture (10, 10a, 10b, 10d, 10 e) à l'état monté depuis le côté de chambre sèche (3).

2. Ensemble moto-réducteur selon la revendication 1, caractérisé en ce que la plaque d'embase (2) et le logement de réducteur (20) pour les éléments à pignons sont formés comme partie de construction d'un seul tenant.

3. Ensemble moto-réducteur selon la revendication 1, caractérisé en ce que la plaque d'embase (2) et le logement de réducteur (20') pour un tambour à câble (230) avec les sorties de câble (200) sont formés comme partie de construction d'un seul tenant.

4. Ensemble moto-réducteur selon la revendication 1, caractérisé en ce que l'ouverture (10, 10d) dans la paroi (1, 1d) entre la chambre humide (A) et la chambre sèche (B) est au moins de dimensions suffisamment importantes pour que le moteur (6) et éventuellement l'appareil de commande électronique (7) ou l'unité de commande et d'entraînement (220d) puissent être menés par l'ouverture (10,10d).

5. Ensemble moto-réducteur selon la revendication 4, caractérisé en ce que le contour de la zone d'étanchéité (3) est en surplomb au-dessus du contour de l'ensemble moto-réducteur (6, 20, 20') et de l'appareil de commande électronique éventuellement prévu (7) avec les connecteurs (71, 72, 73).

6. Ensemble moto-réducteur selon la revendication 1, caractérisé en ce qu'un élément d'étanchéité séparé (3a, 3aa) est fixé sur la zone d'étanchéité de la paroi (1a).

7. Ensemble moto-réducteur selon la revendication 1, caractérisé en ce qu'un élément d'étanchéité séparé (3b) est fixé sur la zone d'étanchéité de la paroi (1b) qui de préférence recouvre sous forme d'une feuille d'étanchéité toute la paroi (1b) à partir du côté de la chambre sèche (B).

8. Ensemble moto-réducteur selon la revendication 1, caractérisé en ce qu'un élément d'étanchéité (3, 3') est intégré d'un seul tenant selon la technique dite à deux composants dans la plaque d'embase (2,2').

9. Ensemble moto-réducteur selon l'une des revendications précédentes, caractérisé en ce que les éléments de fixation (4, 4a, 4b), par exemple les vis, les rivets ou les clips pour le raccordement de la plaque d'embase (2, 2a, 2b) et de la paroi (1, 1a, 1b) se situent à l'intérieur du contour d'étanchéité fermé de l'étanchéité (3, 3a, 3b).

10. Ensemble moto-réducteur pour système de réglage dans des véhicules automobiles avec une paroi d'embase (2c) pouvant être montée dans une ouverture (10c) avec une paroi (1c) séparant une chambre humide d'une chambre sèche et portant l'ensemble moto-réducteur, la sortie du réducteur sur le côté chambre humide (A) et au moins les éléments pour le contact électrique (74) du moteur électrique (6) et éventuellement d'un contacteur et/ou d'un appareil de commande électronique sont disposés sur le côté chambre sèche (B) et avec une zone d'étanchéité entourant l'ouverture (10c), caractérisé en ce que la plaque d'embase (2c) forme au moins une unité avec une partie du logement de réducteur (20c), en ce que l'ouverture (10c) atteint le bord de la paroi (1c) et forme une section essentiellement en forme de U et en ce que la plaque d'embase (2c) présente une gorge de guidage (22) dirigée de façon correspondante au contour de la section en forme de U, qui peut coopérer avec le bord (100c) de l'ouverture (10c).

11. Ensemble moto-réducteur selon la revendication 10, caractérisé en ce que la section en forme de U est ouverte vers le haut.

12. Ensemble moto-réducteur selon la revendication 10, caractérisé en ce que la plaque d'embase (2c) présente une étanchéité périphérique (3c) qui s'appuie sur la paroi (1c) à partir du côté de la chambre humide (A).
